# EUROPEAN PATENT APPLICATION

(11) **EP 3 719 772 A1**
(43) Date of publication of application: **07.10.2020**
(21) Application number: 18882651.5
(22) Date of filing: 15.11.2018
(51) Int. Cl.: G08B 25/00, H04N 7/18

(54) **IMAGE PROCESSING DEVICE, IMAGE PROCESSING SYSTEM, IMAGE PICKUP DEVICE, IMAGE PICKUP SYSTEM, AND IMAGE PROCESSING METHOD**

(30) Priority: 30.11.2017 US 201762592415 P
(71) Applicant: Panasonic Intellectual Property Management Co., Ltd., Osaka-shi, Osaka 540-6207 (JP)
(72) Inventor: ORIKASA, Keiichiro, Osaka 540-6207 (JP); HATAKEYAMA, Takeshi, Osaka 540-6207 (JP)
(74) Representative: Grünecker Patent- und Rechtsanwälte PartG mbB
(86) International application number: PCT/JP2018/042280
(87) International publication number: WO 2019/107167

(57) **Abstract**

The image management device (13) monitors a face of a first person whose image is included in a first image area of a first image acquired from the first imaging device (11) and a posture of the second person whose image is included in a second image area of the first image. The image management device (13) monitors a face of a second person whose image is included in a first image area of a second image acquired from the second imaging device (12) and a posture of the first person whose image is included in a second image area of the second image. The image management device (13) determines a state of the first person based on the face or the posture of the first person, determines the state of the second person based on the face or the posture of the second person, and outputs the determination result.

## Description

### TECHNICAL FIELD

The present disclosure relates to an image processing device, an image processing system, an imaging device, an imaging system, and an image processing method for monitoring the state of a person (in face, posture, etc.) in a moving body such as an aircraft, an automobile, and a train.

### BACKGROUND ART

Japanese Patent Laid-Open Publication No. 2006-88927 discloses a pilot monitoring device installed in a cockpit of an aircraft using a plurality of imaging units. In particular, the pilot monitoring device includes a first imaging unit that captures an image of a pilot (pilot or copilot) who is navigating the aircraft, a second imaging unit that captures an image of the entire cockpit, and a third imaging unit that captures an image of an outside of the aircraft. The first imaging unit is installed so as to have an imaging range that captures an image of the face portion of a pilot seated in the cockpit, and the second imaging unit is installed on a back wall of the cockpit so as to capture an image of the entire cockpit.

According to the disclosure of the prior art, with the first imaging unit, it is possible to monitor the state of a pilot, for example, whether or not the pilot dozes off, and with the second imaging unit, it is possible to determine the state of a copilot and/or a flight engineer in addition to the pilot.

### SUMMARY OF INVENTION

### <Technical Problem>

With the number and arrangement of the imaging units according to the above prior art, the state of a target person may not be sufficiently determined. If the number of imaging units for capturing an image of the state of a target person is increased, then the state determination accuracy may be increased but there is a limit to that number.

The present disclosure relates to an image processing device, an image processing system, an imaging device, an imaging system, and an image processing method that can improve the accuracy of determination on the state of a target person with a limited number of imaging devices.

### <Solution to Problem>

The image processing device according to one aspect of the present disclosure comprises an input unit, a controller, and an output unit. The input unit is configured to input an image acquired from an imaging device. The controller is configured to monitor a face of a first person whose image is included in a first image area of the image and a posture of a second person whose image is included in a second image area of the image, the controller configured to determine a state of the first person and a state of the second person. The output unit is configured to output a result of the determination by the controller.

The imaging device according to another aspect of the present disclosure comprises an image sensor, a lens, an imaging controller, and a transmitter. The image sensor is configured to capture an image of two or more people positioned side by side and produce image data. The lens is set to form an image of a front of a first person out of the two or more people and an image of a diagonal front of a second person out of the two or more people. The imaging controller is configured to produce an image including a first image area and a second image area, the first image area including the image of the front of the first person, the second image area including the diagonal front side of the second person. The transmitter is configured to transmit the produced image to an external device.

The image processing method according to still another aspect of the present disclosure is an image processing method executed by a control device including or connected to an imaging device, the method including: inputting a first image acquired from a first imaging device and a second image acquired from a second imaging device; monitoring a face of a first person whose image is included in a first image area of the first image and a posture of a second person whose image is included in a second image area of the first image; monitoring a face of the second person whose image is included in a first image area of the second image and a posture of the first person whose image is included in a second image area of the second image; determining a state of the first person based on the face and the posture of the first person; determining a state of the second person based on the face and the posture of the second person; and outputting a result of the determination of the state of the first person and the state of the second person.

### <Effects of Invention>

The image processing device, the image processing system, the imaging device, the imaging system, and the image processing method according to the present disclosure can improve the accuracy of monitoring and determining the state of a target person.

### BRIEF DESCRIPTION OF DRAWINGS

FIG. 1A shows a front view of a person to be measured.
FIG. 1B shows a diagonal front view of a person to be measured.
FIG. 2A shows frame data for determining a posture of a person to be measured.
FIG. 2B shows frame data for determining a posture of a person to be measured.
FIG. 3A shows frame data for determining a posture of a person to be measured.
FIG. 3B shows frame data for determining a posture of a person to be measured.
FIG. 4 is a view for explaining a system according to Embodiment 1.
FIG. 5 shows an example of an image acquired from one of two imaging devices.
FIG. 6 shows an example of an image acquired from the other one of the two imaging devices.
FIG. 7 shows an overall configuration of the system including an image processing system according to Embodiment 1.
FIG. 8 shows configurations of two imaging devices according to Embodiment 1.
FIG. 9 is a functional block diagram of a controller of an image management device according to Embodiment 1.
FIG. 10 is a flowchart illustrating processing performed by the controller of the image management device according to Embodiment 1.
FIG. 11 shows an overall configuration of a system including an image processing system according to another embodiment.
FIG. 12 shows configurations of two imaging devices according to another embodiment.
FIG. 13A shows a flowchart illustrating processing performed by a controller of an image management device according to another embodiment.
FIG. 13B shows a flowchart illustrating processing performed by the controller of the image management device according to another embodiment.
FIG. 14 shows a view for explaining a system according to another embodiment.

### DESCRIPTION OF EMBODIMENTS

Hereinafter, embodiments will be described with reference to the drawings when appropriate. In particular, the following description will be given by taking a case where the moving body is an aircraft as an example. The "image" in the following description can be applied to both a still image and a moving image.

### Embodiment 1

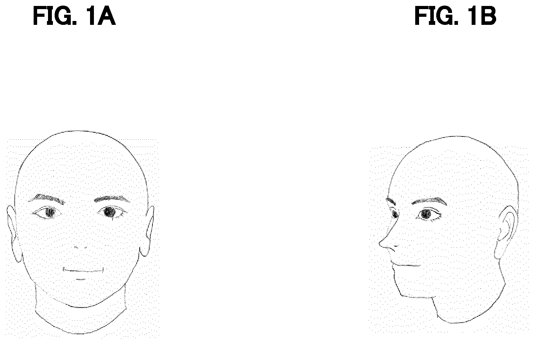

When "face parameters" (e.g. eyelid opening degree, blink interval, mouth opening degree, yawn presence or frequency, eye movement, facial expression, etc.) for a person imaged by an imaging device are to be measured by image recognition in an accurate manner, it is desirable to position the imaging device so as to face a "front" of the person to be measured. FIGS. 1A and 1B show an example of the face of a person to be measured, wherein FIG. 1A shows a case where the front of the face is imaged and FIG. 1B shows a case where the face is imaged in a diagonal direction. As shown in FIG. 1B, when the imaging device is positioned in a direction to face the person other than a front of the person, such as a side of the person, a differential in size occurs between a left eye and a right eye of the person, which can cause acquisition of inaccurate values for the face parameters. This can adversely affect the measurement accuracy.

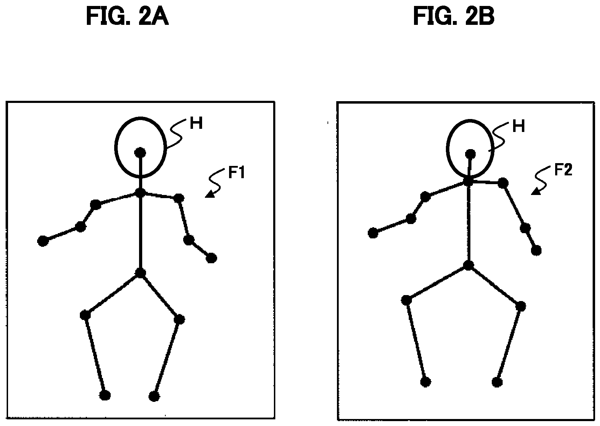

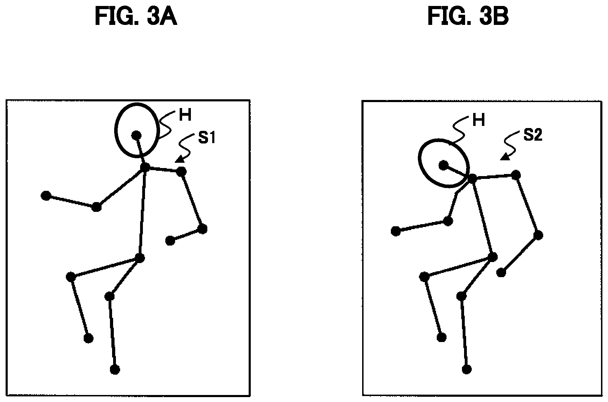

On the other hand, when "posture parameters" (e.g. head tilt, body tilt, arm position, etc.) for a person imaged by an imaging device are to be measured by image recognition in an accurate manner, it is desirable for the imaging device to capture an image of the person to be measured from a "diagonal direction" instead of the front of the person. FIGS. 2A, 2B, 3A, and 3B show frame data including a head H and feature point groups F1, F2, S1, and S2 of the imaged person. The posture of the person is determined by a position and a tilt of the feature points in the frame data. The frame data are generated according to a skeletal frame of the imaged person including a head, a body, and arms of the person. FIGS.2A and 2B show images capturing the front of a person, wherein FIG. 2A shows a state of frame data when the person is seated in a right position, and FIG. 2B shows a state of frame data when the person is seated in a forward leaning posture. In particular, when the person is seated, the range that a posture of the person can change in a lateral direction is limited by the seat, and therefore, the posture of the person such as when the person dozes off tends to change in the front-back direction. On the other hand, FIGS. 3A and 3B show images capturing a person in a diagonal direction, wherein FIG. 3A shows a state of frame data when the person is seated in a right position and FIG. 3B shows a state of frame data when the person is seated in a forward leaning posture. Based on the difference between the frame data in FIGS. 3A and 3B being larger than the difference between the frame data in FIGS. 2A and 2B, it is apparent that the change in the front-back direction, which is a range that the posture can take such as when the person dozes off, can be easily recognized.

As discussed above, it is conceivable that with an imaging device positioned to face a front of the person to be measured, the accuracy of recognition of the posture difference in the front-back direction is diminished, while with an imaging device positioned in a diagonal direction of the person, the accuracy of recognition of the posture difference in the front-back direction is increased.

As a result, measuring parameters of one person's face and posture with a single camera can reduce the measurement accuracy. In particular, the determination of a state of an aircraft pilot requires high measurement accuracy from the viewpoint of safety. On the other hand, installing imaging devices for capturing images of the face and the posture respectively may improve the measurement accuracy, but there is a limited space for installing imaging devices. In particular, as will be described later, this embodiment describes an example of determining the states of pilots (pilot and copilot) seated in the cockpit of an aircraft, and the space where imaging devices can be installed is limited.

With the image processing device, the image processing system, the imaging device, the imaging system, and the image processing method according to the present embodiment, it is possible to improve the accuracy of determination of a state of a target person even with a limited number of imaging devices. Hereinafter, the embodiment will be described.

### 1-1. Overview of Image Processing System 10

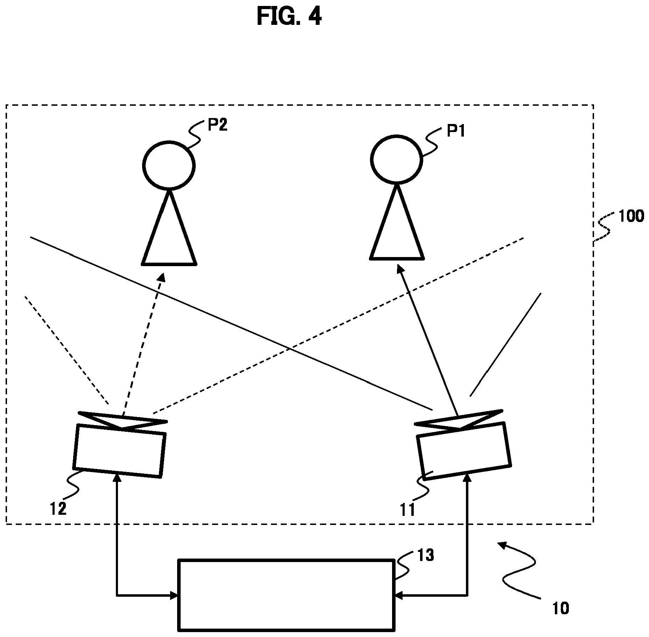

FIG. 4 schematically shows an overall configuration of the image processing system 10 of the present embodiment. The image processing system 10 monitors a plurality of people (here, pilot P1 and copilot P2 in the cockpit of an aircraft) as measurement targets, in which both face parameters and posture parameters of each person are measured. Here, description will be made by taking as an example of monitoring of a plurality of people (pilot and copilot) positioned in the cockpit 100 of an aircraft, but the type of a moving body and a measurement target are not limited to this.

The image processing system 10 comprises imaging devices 11 and 12 such as cameras, and an image management device 13 connected to the imaging devices 11 and 12. The imaging devices 11 and 12 are disposed on a panel where instruments and the like are disposed, in front of the pilot P1 and the copilot P2 in the cockpit 100. The imaging device 11 is disposed at a position where an image of the front of the pilot P1 can be captured and an image of the diagonal left front of the copilot P2 can be captured. On the other hand, the imaging device 12 is disposed at a position where an image of the front of the copilot P2 can be captured and an image of the diagonal right front of the pilot P1 can be captured. Here, each of the imaging device 11 and the imaging device 12 is capable of capturing an image with a wide angle of view.

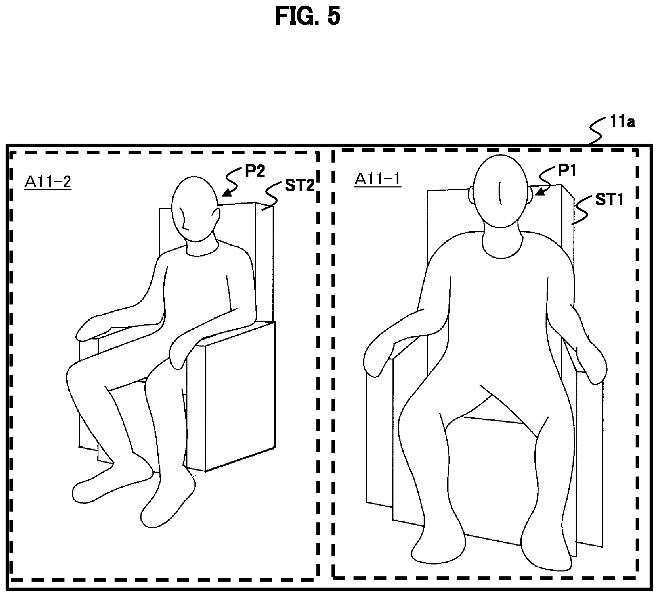

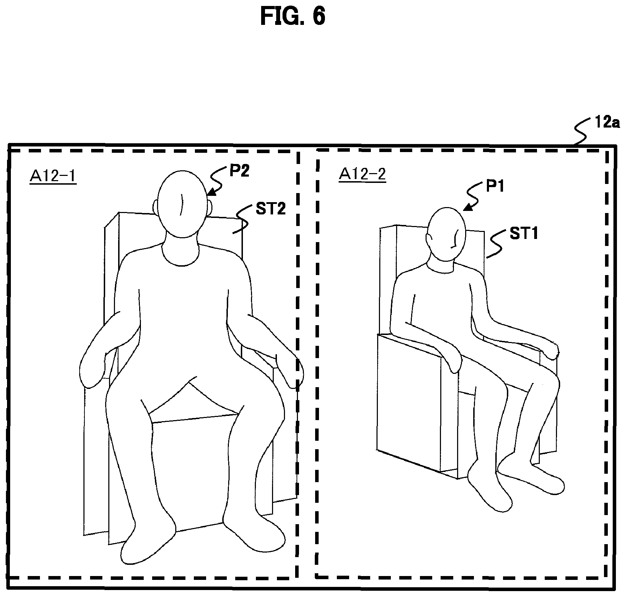

FIG. 5 shows an example of an image 11a captured by the imaging device 11. In this example, the pilot P1 is seated in the pilot seat ST1, the copilot P2 is seated in the copilot seat ST2, and the pilot seat ST1 and the copilot seat ST2 are disposed side by side. In this example, the pilot seat ST1 is disposed on the left side and the copilot seat ST2 is disposed on the right side with respect to a traveling direction of the aircraft. As shown in the figure, the image 11a includes not only an image of the pilot P1 in the front but also an image of the copilot P2 positioned on the diagonally forward left. FIG. 6 shows an example of an image 12a that can be captured by the imaging device 12. The image 12a includes not only an image of the front of the copilot P2 but also an image of the pilot P1 positioned on the diagonally forward right.

Next, based on the images 11a and 12a captured by the imaging device 11 and the imaging device 12 respectively, both the face parameters (for example, facial expressions) and the posture parameters (for example, forward leaning postures of the bodies) of the pilot P1 and the copilot P2 are measured. Specifically, as will be described later, the facial expression of the pilot P1 positioned in the front and the posture of the copilot P2 positioned on the diagonally forward left are measured based on the image 11a captured by the imaging device 11 shown in FIG. 5. Similarly, the facial expression of the copilot P2 positioned in the front and the posture of the pilot P1 positioned on the diagonally forward right are measured based on the image 12a captured by the imaging device 12 shown in FIG. 6.

With that configuration, one image device can be utilized for two different purposes: facial expression monitoring and posture monitoring, and it is possible to measure and monitor both the facial expression of one person and the posture of the other person. In particular, according to this embodiment, it is not necessary to install four imaging devices: one for facial expression monitoring for the pilot P1; another one for posture monitoring for the pilot P1; another one for facial expression monitoring for the copilot P2; and the other one for posture monitoring for the copilot P, in order to monitor and measure the facial expressions and postures of the two people respectively. According to the embodiment, it is possible to perform monitoring with a simple configuration to determine the status of each person.

In this example, determination of the state of a person includes, for example, determining whether or not the person on duty is in an unfavorable state (for example, an abnormal state) from the viewpoint of safety, such as whether or not the person dozes off, retains consciousness, and the like.

### 1-2. Overall Configuration of Image Processing System 10

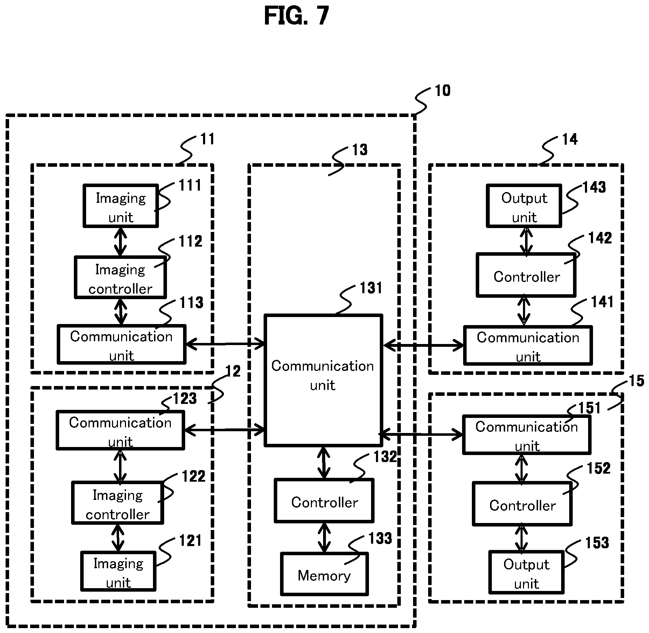

FIG. 7 is a block diagram showing an overall configuration of the image processing system 10 according to this embodiment.

The image processing system 10 includes the imaging device 11 that captures an image of the pilot P1 seated in the pilot seat, the imaging device 12 that captures an image of the copilot P2 seated in the copilot seat disposed in parallel to the pilot seat, and an image management device. 13 (server or the like). The image processing system 10 may be connected to an onboard device 14 and a ground-based device 15. These devices are connected to each other via a communication network (either wired or wireless), and can transmit and receive signals.

Here, the imaging device 11 and the imaging device 12 are disposed in the cockpit 100 (FIG. 4), but the image management device 13 and the onboard device 14 may be disposed either inside or outside the cockpit 100. The imaging device 11 and the imaging device 12 may not be disposed in the right front of the pilot P1 and the copilot P2; instead, they may be disposed above or below the front of these people so as not to obstruct the views of the people. Further, the imaging device 11 and the imaging device 12 may be disposed so as to be laterally movable within a range to measure face parameters of the people instead of being fixedly disposed in the right front of the people. Further, the imaging device 11 and the imaging device 12 may be positioned, rather than in a straight line, at an angle as shown in FIG. 4 such that each can capture an image of the people within a range to measure face parameters of the people.

### 1-3. Configuration and Operation of Imaging Device 11

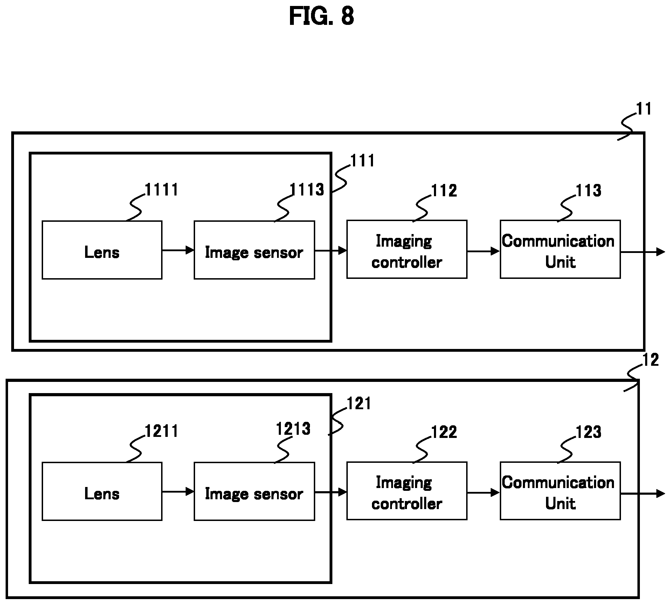

The imaging device 11 is disposed to face the front of the pilot P1 seated in the pilot seat ST1 (FIG. 5), and comprises an imaging unit 111, an imaging controller 112, and a communication unit 113, as shown in FIGS. 7 and 8,

The imaging unit 111 includes, for example, a lens 1111 and an image sensor 1113. The lens 1111 is set so as to image not only the front of the pilot P1 positioned in front of the imaging device 11 but also a diagonal front of the copilot P2 positioned on the diagonally forward left of the imaging device 11. The diagonal front is a side of the person that is viewed diagonally with respect to the front of the person, with an angle but not to the extent of the profile of the person. The image sensor 1113 is, for example, a CMOS image sensor, a CCD image sensor, or the like, and converts light from the lens 1111 into an electric signal to produce an image. Accordingly, as shown in FIG. 5, the image 11a captured by the imaging device 11 includes an image of the front of the pilot P1 on the right side and an image of the diagonal front of the copilot P2 on the left side.

The imaging controller 112 is a processor or circuit that executes processing according to a predetermined program, such as a CPU, and orders the timing to start or end the shooting of the imaging unit 111. The imaging controller 112 also controls the image 11a captured by the imaging unit 111 to be transmitted to the image management device 13 via the communication unit 113.

The communication unit 113 is connected to a communication unit 131 of the image management device 13 by wire or wirelessly, and transmits the image 11a captured by the imaging unit 111 to the image management device 13.

### 1-4. Configuration and Operation of Imaging Device 12

The imaging device 12 is disposed to face the front of the copilot P2 seated in the copilot seat, and comprises an imaging unit 121, an imaging controller 122, and a communication unit 123, as shown in FIGS. 7 and 8, similarly to the imaging device 11.

The imaging unit 121 includes, for example, a lens 1211 such as a wide-angle lens and an image sensor 1213. The lens 1211 is set so as to image not only the front of the copilot P2 positioned in front of the imaging device 12 but also a diagonal front of the pilot P1 positioned on the diagonally forward right of the imaging device 12. Accordingly, as shown in FIG. 6, the image 12a captured by the imaging device 12 includes an image of the front of the copilot P2 on the left side and an image of the diagonal front of the pilot P1 on the right side.

The imaging controller 122 is a processor or circuit that executes processing according to a predetermined program, such as a CPU, and orders the timing to start or end the shooting of the imaging unit 121. The imaging controller 122 also controls the image 12a captured by the imaging unit 121 to be transmitted to the image management device 13 via the communication unit 123.

The communication unit 123 is connected to the communication unit 131 of the image management device 13 by wire or wirelessly, and transmits the image 12a captured by the imaging unit 121 to the image management device 13.

### 1-5. Configuration and Operation of Image Management Device 13

As shown in FIG. 7, the image management device 13 comprises a communication unit 131, a controller 132, and a memory 133. The image management device 13 is a computer device such as a server.

The communication unit 131 is connected to the imaging device 11, the imaging device 12, the onboard device 14, and the ground-based device 15 by wire or wirelessly. The communication unit 131 also receives the image 11a captured by the imaging device 11 and the image 12a captured by the imaging device 12, and inputs these images to the controller 132. As described later, the communication unit 131 monitors the face parameters and the posture parameters for the pilot P1 and the copilot P2 output from the controller 132, determines the states of the pilot P1 and the copilot P2 based on the monitoring results, and transmits the determination results to the onboard device 14 and the ground-based device 15.

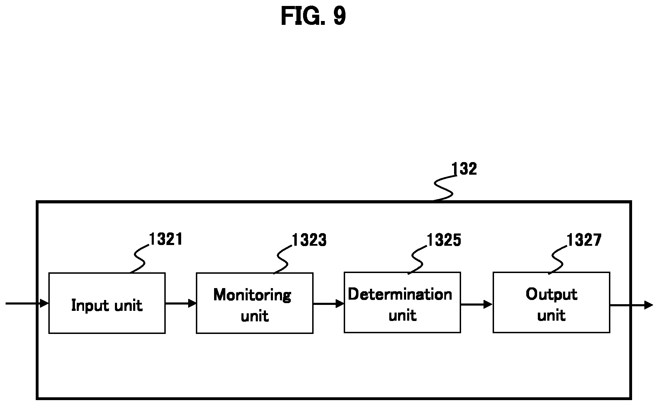

The controller 132 is an example of an image processing device, and is a processor or circuit such as a CPU that executes processing according to a predetermined program. The controller 132 detects a person from each of the image 11a captured by the imaging device 11 and the image 12a captured by the imaging device 12, and monitors the face parameters and the posture parameters for the pilot P1 and the face parameters and the posture parameters for the copilot P2. Specifically, the controller 132 executes processing according to a predetermined program to perform the functions of an input unit 1321, a monitoring unit 1323, a determination unit 1325, and an output unit 1327 as shown in FIG. 9.

The memory 133 is comprised by, for example, a magnetic memory such as an HDD or a semiconductor memory. The memory 133 stores information such as a program to be executed by the controller 132, images 11a and 12a captured by the imaging devices 11 and 12, reference data of face parameters and posture parameters, values of calculation results of the face parameters and posture parameters as monitored by the controller 132, and/or determination results of the state of a person.

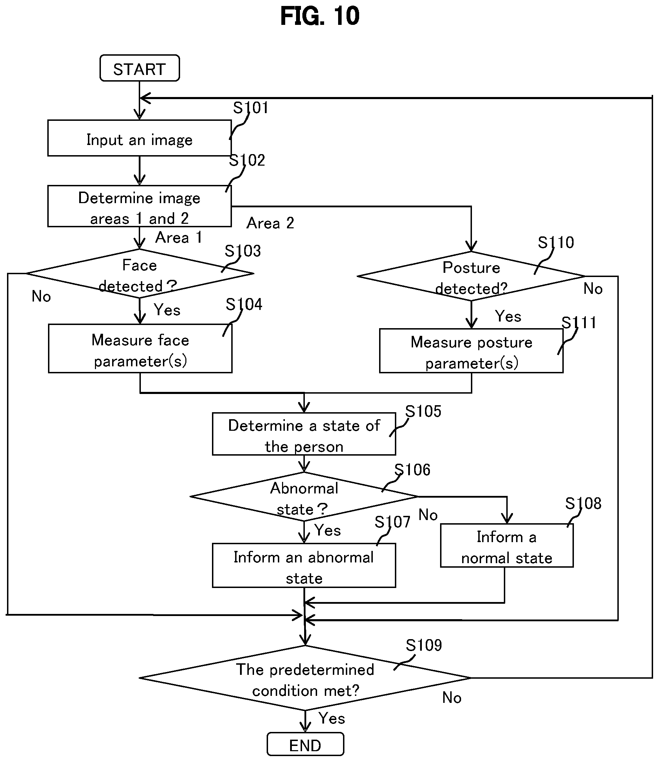

The operation of the controller 132 (FIG. 9) will be mainly described with reference to FIG. 10.

First, the processing for the image 11a input from the imaging device 11 will be described. For the image 11a to be captured, the controller 132 presets an image area A11-1 to include an image of the front of the pilot P1 (in the right side portion of FIG. 5) and an image area A11-2 to include an image of the diagonal front of the copilot P2 (in the left side portion of FIG. 5). The image areas A11-1 and A11-2 are arranged in a lateral direction of the image. Similarly, for the image 12a to be captured by the imaging device 12, the controller 132 presets an image area A12-1 to include an image of the front of the copilot P2 (in the left side portion of FIG. 6) and an image area A12-2 to include an image of the diagonal front of the pilot P1 (in the right side portion of FIG. 6). The image areas A12-1 and A12-2 are arranged in a lateral direction of the image.

The input unit 1321 of the controller 132 inputs the image 11a acquired from the imaging device 11 (S101). The monitoring unit 1323 of the controller 132 determines the preset image area A11-1 (Area 1) and image area A11-2 (Area 2) of the image 11a (S102).

For Area 1, the monitoring unit 1323 of the controller 132 detects the face of the person (pilot P1) whose image is included in the image region A11-1 (S103), and measures face parameters (for example, eyelid opening degree, blink interval, mouth opening degree, yawn presence or frequency, eye movement, facial expression, etc.) (S104). Then, the determination unit 1325 of the controller 132 determines a state of the pilot P1 by determining whether or not the measured face parameters meet a predetermined abnormal condition (S105). This determination is made by, for example, comparing these parameters to reference data stored in the memory 133 and determining whether the difference is a predetermined value or more. The reference data include, for example, values or a predetermined range of the face parameters in a normal state, or a predetermined change pattern. The predetermined change pattern is, for example, a predetermined behavior that can be observed when a person feels drowsy, such as a person repeating his/her eyes wide opening and closing for a certain period of time. In the determination, for example, if a measured value of the eyelid opening degree meets an abnormal condition (such as a case where the measured value is maintained to be smaller than the reference data by a predetermined value or more for a certain period of time), it is determined that an abnormal state has occurred. When it is determined that an abnormal state has occurred (Yes in S106), the output unit 1327 of the controller 132 sends a signal indicating an abnormal state to the onboard device 14 and the ground-based device 15 via the communication unit 131 (S107). On the other hand, when it is determined that no abnormal state has occurred (No in S106), the output unit 1327 of the controller 132 sends a signal indicating a normal state to the onboard device 14 and the ground-based device 15 via the communication unit 131 (S108). The normal state notification in step S108 may not be performed.

On the other hand, for Area 2, the monitoring unit 1323 of the controller 132 extracts feature points for determining the posture of the person (copilot P2) whose image is included in the image region A11-2 to detect the posture (S110), and measures posture parameters such as a head tilt, a body tilt, arm positions, etc.(S111). In this measurement, as shown in FIGS. 2A, 2B, 3A, and 3B for example, frame data including a head H and feature point groups F1, F2, S1, and S2 extracted from the captured image of the person are produced, and the measurement is made based on the tilt and form in the frame data. Then, the determination unit 1325 of the controller 132 determines a state of the copilot P2 by determining whether or not the measured posture meets a predetermined abnormal condition (S105). This determination includes, for example, with one or more reference patterns (in a normal posture) serving as a reference stored in the memory 133, comparing the frame pattern measured from the image with the reference patterns, monitoring whether or not the difference is equal to or more than a predetermined value, and determining the posture state based on the monitoring result. For example, when the measured value indicating a degree of forward tilt of the person meets the abnormal condition, i.e. the difference being larger than the predetermined value as compared to the normal time, it is determined that an abnormal state has occurred. When it is determined that an abnormal state has occurred (Yes in S106), the output unit 1327 of the controller 132 sends a signal indicating the abnormal state to the onboard device 14 and the ground-based device 15 via the communication unit 131 (S107). On the other hand, when it is determined that no abnormal state has occurred (No in S106), the output unit 1327 of the controller 132 sends a signal indicating a normal state to the onboard device 14 and the ground-based device 15 via the communication unit 131 (S108).

Next, an operation for the image 12a from the imaging device 12 will be described.

The input unit 1321 of the controller 132 inputs the image 12a acquired from the imaging device 12 (S101). The monitoring unit 1323 of the controller 132 determines the image areas A12-1 (Area 1) and A12-2 (Area 2) of the image 12a (S102).

For Area 1, the monitoring unit 1323 of the controller 132 detects the face of the person (the copilot P2) whose image is included in the image area A12-1 (S103) similarly to the above-described processing for the image area A11-1, and measures face parameters (S104). Then, similarly to the above-described processing for the image area A11-1, the determination unit 1325 of the controller 132 determines a state of the copilot P2 by determining whether or not the measured face parameters meet the predetermined abnormal condition (S105). When it is determined that an abnormal state has occurred (Yes in S106), the output unit 1327 of the controller 132 sends a signal indicating an abnormal state to the onboard device 14 and the ground-based device 15 via the communication unit 131 (S107). On the other hand, when it is determined that no abnormal state has occurred (No in S106), the output unit 1327 of the controller 132 sends a signal indicating a normal state to the onboard device 14 and the ground-based device 15 via the communication unit 131 (S108).

On the other hand, for Area 2, the monitoring unit 1323 of the controller 132 extracts feature points for determining the posture of the person (pilot P1) whose image is included in the image region A12-2 to detect the posture (S110) and measures posture parameters, similarly to the above-described processing for the image area A11-2. The determination unit 1325 of the controller 132 determines a state of the pilot P1 by determining whether or not the measured posture meets the predetermined abnormal condition (S105), similarly to the above-described processing for the image area A11-2. When it is determined that an abnormal state has occurred (Yes in S106), the output unit 1327 of the controller 132 sends a signal indicating an abnormal state to the onboard device 14 and the ground-based device 15 via the communication unit 131 (S107). On the other hand, when it is determined that no abnormal state has occurred (No in S106), the output unit 1327 of the controller 132 sends a signal indicating a normal state to the onboard device 14 and the ground-based device 15 via the communication unit 131 (S108).

When a predetermined condition is satisfied (Yes in S109), the controller 132 ends the processing. Here, the predetermined condition includes, for example, the face of the pilot P1 or the copilot P2 to be measured being not detected in step S103, the state of the pilot P1 or the copilot P2 having been determined to be abnormal, and/ or an order to stop the operation by the image management device 13 being input by an input operation. Unless the processing is ended, the processes in steps S101 to S108 are repeated.

As a result, the controller 132 of the image management device 13 can monitor face parameters for the pilot P1 and posture parameters for the copilot P2 based on the image 11a from the imaging device 11, while monitoring face parameters for the copilot P2 and posture parameters for the pilot P1 based on the image 12a from the imaging device 12. That is, by using a single imaging device for two purposes: monitoring a face parameter and monitoring a posture parameter, it is possible to monitor facial expressions and postures of two people and determine states of the both.

The sequence of execution of the flowchart in FIG. 10 is not necessarily limited to the above described sequence, and a part of the sequence may be performed concurrently, or the sequence may be changed without departing from the gist of the present invention. For example, the processes in S101 to S108 for the image areas A11-1, A11-2, A12-1, and A12-2 of the images 11a and 12a may be performed concurrently or in sequence.

Further, in the above processing, the face parameter or the posture parameter is not limited to a single parameter. The above processing may be executed for one, some or all of the plural parameters. When any of the parameters is abnormal, an abnormal state may be notified.

Here, an example was described where "normal" or "abnormal" is determined as the state of a person. The controller 132 may set a plurality of determination conditions to determine a more number of states such as "normal", "caution", "danger", and "abnormal". For example, the determination result may be output as follows: if both the face parameter and the posture parameter take abnormal values, "abnormal" is output; if only the posture parameter takes an abnormal value, "danger" is output; and if only the face parameter takes an abnormal value, "caution" is output. Alternatively, the determination result may be output according to a degree of the abnormal value of the posture parameter and/or the face parameter (a degree of deviation from the reference data).

### 1-6. Configuration and Operation of Onboard device 14

The onboard device 14 shown in FIG. 7 is, for example, a stationary or portable display terminal operated by an aircraft crew, and comprises a communication unit 141, a controller 142, and an output unit 143.

The communication unit 141 receives, from the communication unit 131 of the image management device 13, a status determination result for the pilot P1 (normal, abnormal, etc.) and a status determination result for the copilot P2 (normal, abnormal, etc.). The controller 142 is a processor or circuit that executes processing according to a predetermined program, such as a CPU, and controls the output unit 143 to output the state determination result for the pilot P1 or the copilot P2 received by the communication unit 141. In particular, when the determination result includes a signal indicating an abnormal state, the output unit 143 is controlled to output a signal in an output form different from that for a normal state. The output unit 143 is, for example, a display, a speaker, or the like, and informs the determination result received by the communication unit 141 by display or sound. In particular, when the determination result includes a signal indicating an abnormal state, the output unit 143 outputs a display output form (color, characters, figures, etc.) or a sound output form (volume, sound type, etc.), which are different from a normal state.

As a result, a crew member who operates the onboard device 14, for example, can perceive the states of the pilot P1 and/or the copilot P2 in the cockpit 100.

### 1-7. Configuration and Operation of Ground Device 15

The ground-based device 15 shown in FIG. 7 is, for example, a management device in a controller system that monitors flight conditions of the aircraft on a flight route from the ground, and is a computer device including a communication unit 151, a controller 152, and an output unit 153.

The communication unit 151 receives, from the communication unit 131 of the image management device 13, a status determination result for the pilot P1 (normal, abnormal, etc.) and a status determination result for the copilot P2 (normal, abnormal, etc.). The controller 152 is a processor or circuit that executes processing according to a predetermined program, such as a CPU, and controls the output unit 153 to output the state determination result for the pilot P1 or the copilot P2 received by the communication unit 151. In particular, when the determination result includes a signal indicating an abnormal state, the output unit 153 is controlled to output a signal in an output form different from that for a normal state. The output unit 153 is, for example, a display, a speaker, or the like, and informs the determination result received by the communication unit 151 by display or sound. In particular, when the determination result includes a signal indicating an abnormal state, the output unit 153 outputs a display output form (color, characters, figures, etc.) or a sound output form (volume, sound type, etc.), which are different from a normal state.

As a result, a person who monitors a flight condition of the aircraft with an air traffic control system can perceive the states of the pilot P1 and/or the copilot P2 in the cockpit 100.

### Other Embodiments

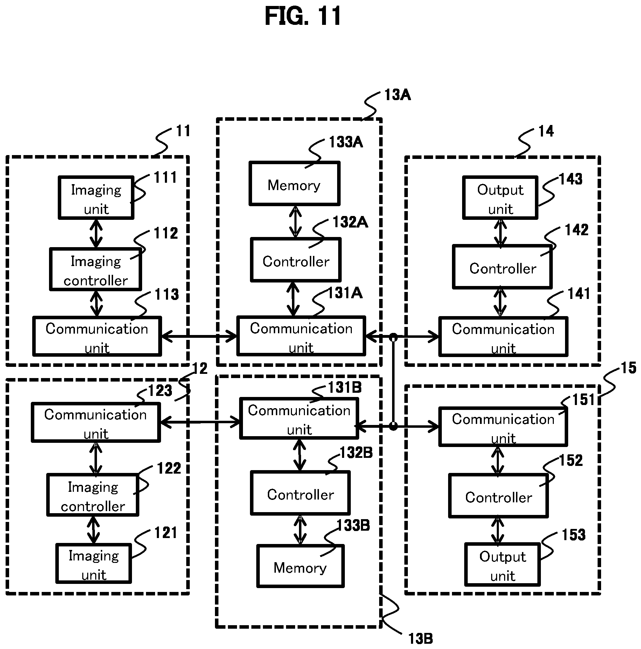

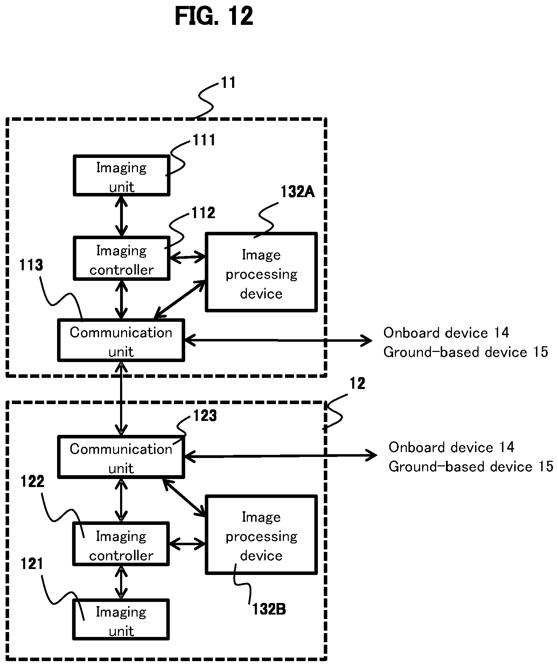

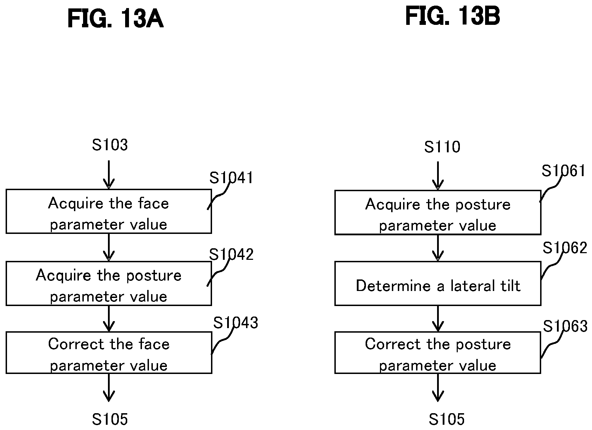

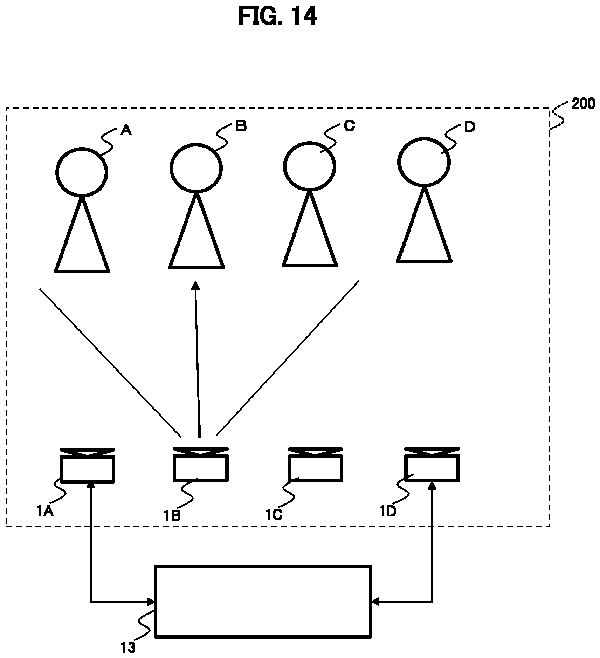

As described above, the embodiment has been described as an example of the technique disclosed in the present application. However, the technique in the present disclosure is not limited to this, and is also applicable to an embodiment in which changes, replacements, additions, omissions, etc. are appropriately made. It is also possible to combine the respective constituent elements described in the above embodiment to form a new embodiment. For example, the following modifications and applications are possible.
(1) In the above-mentioned embodiment, as shown in FIGS. 5 and 6, an example was described where the image 11a acquired from the imaging device 11 and the image 12a acquired from the imaging device 12 are set to have an image area including an image of the pilot P1 and an image area including an image of the copilot P2 respectively, and different image processing (face parameter monitoring and posture parameter monitoring) is executed on each image region.
   However, this is not the only option. For example, the controller 132 may detect the face of a person whose image is included in each of the image 11a and the image 12a, and then by using sizes of the detected face areas, perform different image processing for each area (face parameter monitoring and posture parameter monitoring). For example, the controller 132 may detect faces of the people whose images are included in the image 11a, measure a face parameter for the person whose size of the detected face area is equal to or larger than a predetermined value, and measure a posture parameter for the person whose size of the detected face area is less than the predetermined value.
   With this configuration, it is not necessary to preset image areas, and it is possible to separately monitor face parameters and posture parameters for plural people.
(2) In the above embodiment, an example was described where the controller 132 of the image management device 13 performs image processing (face parameter monitoring, posture parameter monitoring, and state determination) for both the image 11a from the imaging device 11 and the image 12a from the imaging device 12, as shown in FIG. 4.
   However, this is not the only option. As shown in FIG. 11, the image management device may be separately provided as an image management device 13A that executes monitoring/determination processing for the image 11a and an image management device 13B that executes monitoring/determination processing for the image 12a. The image management device 13A and the image management device 13B have the same configuration and function as the image management device 13 of the above-described embodiment. Specifically, the communication unit 131A, the controller 132A, and the memory 133A of the image management device 13A are the same as the communication unit 131, the controller 132, and the memory 133 of the image management device 13 (FIG. 7) that performs image processing on the image 11a. The communication unit 131B, the controller 132B, and the memory 133B of the image management device 13B are the same as the communication unit 131, the controller 132, and the memory 133 of the image management device 13 (FIG. 7) that performs image processing on the image 12a.
   With this configuration, processing load on the controller 132 of the image management device 13 can be reduced.
(3) The controllers 132A and 132B of the image management devices 13A and 13B shown in FIG. 11 may be installed in the imaging devices 11 and 12 respectively, as image processing devices as shown in FIG. 12. The image processing device 132A executes the above-described monitoring/determination processing on the image 11a captured by the imaging unit 111, and transmits a state determination result for the pilot P1 or the copilot P2 via the communication unit 113 to the onboard device 14 or the ground-based device 15. Similarly, the image processing device 132B executes the above-described monitoring/determination processing on the image 12a captured by the imaging unit 121, and transmits its determination result to the onboard device 14 or the ground-based device 15 via the communication unit 123.
(4) In the face parameter measurement (S104) executed by the image management device 13 shown in FIG. 10, the controller 132 may correct, based on the posture parameter for the pilot P1 whose image is included in the image area A12-2 (FIG. 6) of the image 12a from the imaging device 12, a value of the face parameter for the pilot P1 acquired from the image area A11-1 (FIG. 5) of the image 11a from the imaging device 11, and determine a state of the pilot P1 based on the corrected parameter value.
   After detecting the face of the pilot P1 based on the image area A11-1 of the image 11a (S103 in FIG. 10), the controller 132 acquires the measured face parameter value (S1041), as shown in FIG. 13A. The controller 132 then acquires the posture parameter value for the pilot P1 measured in step S111 based on the image area A12-2 of the image 12a (S1042), and corrects the face parameter value based on the posture parameter value (S1043). For example, when the posture parameter value indicates a forward leaning posture of the pilot P1, it can be assumed that the pilot P1 is prone to look down and the eye opening degree that can be observed from the front is smaller than actually is. Accordingly, the face parameter for the eye opening degree may be corrected to be larger than the actual measured value.
   When the face parameter is measured, there is a possibility that the facial expression may be measured differently if the face is tilted in the front-back direction. In this case, the tilt in the front-back direction may be measured based on the image area A12-2 of the image 12a which includes an image of the diagonal front of the pilot P1 and the measured result may be reflected in the measurement of the face parameter. This can enhance the accuracy of posture measurement.
   Similarly, the face parameter value for the copilot P2 acquired based on the image area A12-1 (FIG. 6) of the image 12a from the imaging device 12 may be corrected by the posture parameter value for the copilot P2 acquired based on the image area A11-2 (FIG. 5) of the image 11a from the imaging device 11.
(5) In the posture parameter measurement (S111) executed by the image management device 13 shown in FIG. 10, the controller 132 may correct, based on for example a lateral tilt of the pilot P1 whose image is included in the image area A11-1 (FIG. 5) of the image 11a from the imaging device 11, a value of the posture parameter for the pilot P1 acquired from the image area A12-2 (FIG. 6) of the image 12a from the imaging device 12, and determine a state of the pilot P1 based on the corrected parameter value.
   After detecting the posture of the pilot P1 based on the image area A12-2 of the image 12a (S110 in FIG. 10), the controller 132 acquires the posture parameter value as described above, as shown in FIG. 13B (S1061). The controller 132 then determines a lateral tilt based on the image of the pilot P1 acquired in step S103 based on the image area A11-1 of the image 11a (S1062), and corrects the posture parameter value for the pilot P1 based on the determined tilt. (S1063).
   When the posture parameter is measured with the imaging device disposed diagonally in front, a tilt in the front-back direction is easy to measure, but a tilt in the left-right direction is difficult to measure. Therefore, the lateral tilt of the face and/or body of the pilot P1 can be measured based on the image area A11-1 of the image 11a capturing an image of the front of the pilot P1, and the measured result may be reflected in the measurement of the posture parameter. This can improve the accuracy of the posture measurement.
   Similarly, the posture parameter value for the copilot P2 acquired based on the image area A11-2 (FIG. 5) of the image 11a from the imaging device 11 may be corrected according to a lateral tilt of the face and/or body of the copilot P2 whose image is included in the image area A12-1 (FIG. 6) of the image 12a from the imaging device 12.
(6) In the above embodiment, the controller 132 of the image management device 13 may acquire personal data of the pilot P1 and the copilot P2, and determine states of the pilot P1 and the copilot P2 by way of comparison with the personal data. The personal data include, for example, race, nationality, reference data based on an image in a normal state saved when the target person boarded an aircraft last time, and the like.
   Accordingly, the determination can be performed based on reference data according to for example, a size of eyes, body and the like of a person. This can further enhance the measurement accuracy.
(7) In the above-mentioned embodiment, an example is described where two people are monitored as monitoring targets, but this is not the only option. More than two people may be monitored. For example, as shown in FIG. 14, the image processing system of the above embodiment can be applied to a case of monitoring four people seated in a four-row seat arranged in a cabin 200 of an aircraft (for example, person A, B, C, D in order from the left side seat) .
   Specifically, the imaging devices 1A, 1B, 1C, and 1D are disposed in front of the person A to D respectively, and each imaging device captures an image area including not only an image of a person seated in front of the imaging device but also at least an image of a person seated in an adjacent seat. As an example, the imaging device 1B disposed in front of the person B captures an image area including not only an image of the front of the person B but also at least an image of the person A and C seated in the adjacent seats. The image management device 13 sets at least three image areas in the image from the imaging device 1B. Based on the image from the imaging device 1B, the image management device 13 can measure and monitor a face parameter based on the image area in which the person B is captured, while it may measure and monitor posture parameters based on the image areas in which the person A and the person C are captured.
(8) In the above embodiment, face and posture parameters for plural people to be measured are measured and monitored based on images from multiple imaging devices to determine the state of each person, but this is not the only option. The states of two people to be measured may be determined with a single imaging device, in which case the accuracy is somewhat suppressed. In this case, the state of one person is determined based on his/her face parameter, while the state of the other person is determined based on his/her posture parameter.
(9) In the above embodiment, an aircraft is taken as an example of the moving body, but it may be another moving body, such as another flying body (helicopter, military aircraft, etc.), an automobile, a train, or a ship.

### REFERENCE NUMERALS

10: Image processing system, 11/12: Imaging device, 13: Image management device, 14: Onboard device, 15: Ground-based device, 100: Cockpit, 111: Imaging unit, 112: Imaging controller, 113: Communication unit, 121: Imaging unit, 122: Imaging controller, 123: Communication unit, 131: Communication unit, 132: Controller, 133: Memory, 141: Communication unit, 142: Controller, 143: Output unit, 151: Communication unit, 152: Controller, 153: Output unit, 200: Guest room, 1111: Lens, 1113: Image sensor, 1211: Lens, 1213: Image sensor, 1321: Input unit, 1323: Monitoring unit, 1325: Determination unit, 1327: Output unit, P1: Pilot, P2:Copilot

## Claims

1. An image processing device comprising:
an input unit configured to input an image acquired from an imaging device;
a controller configured to monitor a face of a first person whose image is included in a first image area of the image and a posture of a second person whose image is included in a second image area of the image, the controller configured to determine a state of the first person and a state of the second person; and
an output unit configured to output a result of the determination by the controller.

2. The image processing device according to claim 1, wherein
the first image area and the second image area are arranged in a lateral direction of the image,
the first image area is set to include an image of a first seat on which the first person is to be seated,
the second image area is set to include an image of a second seat on which the second person is to be seated,
the controller is configured to determine the first image area and the second image area and monitor the face of the first person and the posture of the second person based on the determination of the first image area and the second image area.

3. The image processing device according to claim 2, wherein
the input unit is configured to input the image, the image including an image of a substantially front of the first seat and an image of a diagonal front of the second seat.

4. The image processing device according to claim 1, wherein
the input unit is configured to input a first image acquired from a first imaging device and a second image acquired from a second imaging device, and the controller is configured to:
monitor the face of the first person whose image is included in a first image area of the first image and the posture of the second person whose image is included in a second image area of the first image;
monitor a face of the second person whose image is included in a first image area of the second image and a posture of the first person whose image is included in a second image area of the second image;
determine a state of the first person based on the face or the posture of the first person; and
determine a state of the second person based on the face or the posture of the second person.

5. The image processing device according to claim 4, wherein the controller is configured to:
correct a value of a face parameter for the first person whose image is taken from the first image area of the first image, based on the posture of the first person whose image is included in the second image area of the second image; and
determine the state of the first person based on the corrected value of the face parameter.

6. The image processing device according to claim 4 or 5, wherein the controller is configured to:
correct a value of a posture parameter for the first person whose image is taken from the second image area of the second image, based on a lateral tilt of the first person whose image is included in the first image area of the first image; and
determine the state of the first person based on the corrected value of the posture parameter.

7. The image processing device according to any one of claims 1 to 6, wherein the controller is configured to:
acquire personal data of the first person and the second person; and
determine the state of the first person and the state of the second person based on comparison with the personal data.

8. The image processing device according to any one of claims 1 to 7, wherein
the controller is configured to monitor the face of the first person and a face of the second person by determining a face parameter,
the controller is configured to monitor a posture of the first person and the posture of the second person by determining a posture parameter,
the face parameter includes at least one of eyelid opening degree, blink interval, mouth opening degree, yawn presence or frequency, eye movement, facial expression on the detected face, and
the posture parameter includes at least one of a head tilt, a body tilt, and an arm position.

9. The image processing device according to any one of claims 1 to 8, wherein
the controller is configured to stop the monitoring according to a predetermined condition, and
the predetermined condition includes at least either one of: the face of the first person or the second person being not detected; or the state of the first person or the second person being determined to be abnormal.

10. An image processing system comprising:
the image processing device according to any one of claims 1 to 9; and
one or more imaging devices including or connected to the image processing device.

11. An imaging device comprising:
an image sensor configured to capture an image of two or more people positioned side by side and produce image data;
a lens set to image a front of a first person out of the two or more people and a diagonal front of a second person out of the two or more people;
an imaging controller configured to produce an image including a first image area and a second image area, the first image area including an image of the front of the first person, the second image area including an image of the diagonal front of the second person; and
a transmitter configured to transmit the produced image to an external device.

12. An imaging system comprising a plurality of the imaging devices according to claim 11 including a first imaging device and a second imaging device, wherein
the lens of the first imaging device is set to image the front of the first person and the diagonal front of the second person,
the lens of the second imaging device is set to image a front of the second person and a diagonal front of the first person,
the imaging controller of the first image device is configured to produce a first image including a first image area and a second image area, the first image area of the first image including an image of the front of the first person, the second image area of the first image including an image of the diagonal front of the second person,
the imaging controller of the second imaging device is configured to produce a second image including a first image area and a second image area, the first image area of the second image including an image of the front of the second person, the second image area of the second image including an image of the diagonal front of the first person, and
the transmitter is configured to transmit the first image and the second image to the external device.

13. An image processing method executed by an image processing device including or connected to an imaging device, the method comprising:
inputting a first image acquired from a first imaging device and a second image acquired from a second imaging device;
monitoring a face of a first person whose image is included in a first image area of the first image and a posture of a second person whose image is included in a second image area of the first image;
monitoring a face of the second person whose image is included in a first image area of the second image and a posture of the first person whose image is included in a second image area of the second image;
determining a state of the first person based on the face or the posture of the first person;
determining a state of the second person based on the face or the posture of the second person; and
outputting a result of the determination of the state of the first person or the state of the second person.
